(19) Europäisches Patentamt
European Patent Office
Office européen des brevets

(11) **EP 1 562 855 B1**

(12) **EUROPÄISCHE PATENTSCHRIFT**

(45) Veröffentlichungstag und Bekanntmachung des Hinweises auf die Patenterteilung:
**13.05.2009   Patentblatt 2009/20**

(21) Anmeldenummer: **03785528.5**

(22) Anmeldetag: **20.11.2003**

(51) Int Cl.:
*C01B 31/08* $^{(2006.01)}$

(86) Internationale Anmeldenummer:
**PCT/DE2003/003866**

(87) Internationale Veröffentlichungsnummer:
**WO 2004/046033 (03.06.2004 Gazette 2004/23)**

(54) **KUGELAKTIVKOHLE**

SPHERICAL ACTIVE CARBON

CHARBON ACTIF EN FORME DE BOULE

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **20.11.2002   DE 10254241**

(43) Veröffentlichungstag der Anmeldung:
**17.08.2005   Patentblatt 2005/33**

(73) Patentinhaber: **Blücher GmbH
40699 Erkrath (DE)**

(72) Erfinder:
  • **SCHÖNFELD, Manfred
    06862 Rosslau (DE)**
  • **SCHÖNFELD, Raik
    06862 Rosslau (DE)**

(74) Vertreter: **Gesthuysen, von Rohr & Eggert
Patentanwälte
Postfach 10 13 54
45013 Essen (DE)**

(56) Entgegenhaltungen:
**US-A- 5 094 754          US-B1- 6 300 466**

  • **HAYASHI J ET AL: "Fractal dimensions of activated carbons prepared from lignin by chemical activation" CARBON, XX, XX, Bd. 40, Nr. 4, April 2002 (2002-04), Seiten 630-632, XP004339137 ISSN: 0008-6223**

## Beschreibung

Gebiet der Erfindung.

Die Erfindung betrifft eine Kugelaktivkohle mit verbesserten Eigenschaften. Kugelaktivkohlen im Sinne der Erfindung sind Aktivkohlepartikel mit im.wesentlichen ähnlichen Erstreckungen in allen drei Raumdimensionen. Neben der Kugelform kommen insofern auch die Würfelform, Quaderform oder Zylinderform in Frage, sofern die Erstreckungen in zwei verschiedenen Raumdimensionen sich nicht um mehr als den Faktor 3, besser weniger als den Faktor 2, unterscheiden.

Hintergrund der Erfindung und Stand der Technik.

Neben Anwendungen, in welchen klassische Aktivkohlen als Massenprodukt eingesetzt werden, gewinnen Anwendungen zunehmend an Bedeutung, die spezielle Hochleistungsaktivkohlen erfordern. Dies sind zu einen Anwendungen, bei welchen die erforderlichen Menge an Aktivkohle für einen bestimmten Zweck und eine bestimmte Einsatzdauer niedrig zu halten sind und dennoch hervorragende Adsorptionsleistungen (Adsorptionskinetik, Kapazität) verlangt werden. Dies sind insbesondere mobile Anwendungen, wie in Filtern in Fahrzeugen (Kfz, Flugzeuge, etc.) oder in Gasmasken, aber auch in Gebäudeluftfiltern. Neben einem günstigen Leistungsgewicht spielen dabei auch andere Anforderungen eine Rolle, wie beispielsweise geringer Druckabfall über einen die Aktivkohle enthaltenden Filter. Dies bedeutet aber auch, daß es aus insofern zusätzlichen Anforderungen nicht immer möglich ist, hinsichtlich der BET Oberfläche maximierte Aktivkohlen einzusetzen; es kann vielmehr notwendig sein, Aktivkohlen einzusetzen, die trotz moderater BET Oberfläche dennoch überragende Absorptionseigenschaften aufweisen. In jedem Fall sind ausgezeichnete Adsorptionsleistungen verlangt, insbesondere im Falle von Filtern, die vor Giftgasen Personenschutz bieten sollen.

Aus der Literaturstelle EP 0 326 271 ist eine Aktivkohle bekannt, die aus einem polysulfonierten Copolymer herstellbar ist. Sie besitzt eine multimodale Porengrößenverteilung, i.e. einen hohen Anteil an Meso- und Makroporen.

Aus der Literaturstelle WO 96/21616 ist eine aus monosulfonierten Copolymeren hergestellte Aktivkohle bekannt. Auch diese Aktivkohle weist einen relativ hohen Anteil an Meso- und Makroporen auf.

Aus der Literaturstelle WO 99/28234 ist ein Verfahren zur Herstellung einer Aktivkohle aus einem Styrol-Divinylbenzol-Copolymeren bekannt, wobei durch Variation verfahrensmäßiger Parameter die Porengrößenverteilung in weiten Bereichen eingestellt werden kann. Die im Rahmen dieser Literaturstelle gezielt hergestellten Aktivkohlen weisen allerdings einen Anteil von Poren > 3 nm oberhalb von 13 Vol% der gesamten offenen Porosität auf.

Allen vorstehend beschriebenen bekannten Aktivkohlen ist der Nachteil gemeinsam, daß die Adsorptionsleistung noch nicht allen Anforderungen, welche an Hochleistungsadsorbenzien, insbesondere im mobilen Bereich, gestellt werden, genügt.

Technisches Problem der Erfindung.

Der Erfindung liegt das technische Problem zu Grunde, eine Aktivkohle zur Verfügung zu stellen, die allen Anforderungen eines Hochleistungsadsorbens genügt.

Grundzüge der Erfindung und bevorzugte Ausführungsformen.

Zur Lösung dieses technischen Problems lehrt die Erfindung eine Kugelaktivkohle mit einer Porengrößenverteilung, angegeben als Vol-% des Gesamtporenvolumens im Porendurchmesserbereich und gemessen gemäß Beispiel 3, wie folgt: a) 1,2 - 1,7 nm: 20 - 50 %, b) 1,7 - 2,1 nm: 20 - 50 %, c) 2,1 - 2,5 nm: 10 - 25 %, d) 2,5 - 2,9 nm: 3 - 15 %, e) 2,9 - 3,3 nm: 1 - 10 %, wobei die Summe aus a) bis e) zumindest 88 % ergibt, wobei die Differenz der Summe aus a) bis e) zu 100% einen Anteil Poren mit einem Durchmesser < 1,2 nm und/oder > 3,3 nm definiert, und wobei die fraktale Dimension der offenen Porosität, gemessen gemäß Beispiel 4, zumindest 2,30 beträgt.

Angaben zu Porenvolumina beziehungsweise Volumenanteile beziehen sich stets auf die offene Porosität, was sich auch unmittelbar aus den in den Beispielen erläuterten Messverfahren ergibt. Geschlossene Porosität, wie beispielsweise mittels der Neutronenkleinwinkelstreuung ermittelbar, ist dagegen aus der angenommenen Gesamtporosität ausgeschlossen.

Die Erfindung beruht auf der Erkenntnis, daß eine allen Anforderungen genügende Aktivkohle dadurch erhalten wird, daß gezielt einerseits eine relativ hohe Mikroporosität eingestellt wird und andererseits gezielt eine definierte Oberflächenrauhigkeit innerer Oberflächen erzeugt wird. Letztere läßt sich beschreiben über die fraktale Dimension, wie folgend erläutert. Überraschenderweise ist entgegen den Vermutungen im Stand der Technik ein größerer Teil an Meso- und Makroporen zur Verbesserung der Transportkinetik nicht erforderlich.

Aufgrund der Komplexität einer rauhen, insbesondere mikrorauhen, Oberfläche sind Angaben über die Fläche der Oberfläche problematisch. Denn die Fläche hängt von der verwendeten Auflösung bei der Flächenermittlung ab. Die topologische Dimension einer Fläche beträgt stets 2 (topologische Dimensionen sind stets ganzzahlig). Dagegen kann die Hausdorff-Besicovitsch-Dimension oder fraktale Dimension aufgrund der Szpilrajn-Ungleichung einen Wert > 2 annehmen, sofern die Fläche eine Struktur, insbesondere eine Mikrostruktur aufweist. Die fraktale Dimension ist im Falle einer Fläche jedoch stets kleiner 3, da die Raumdimensionen gequantelt sind, und folglich nicht beliebig kleine selbstähnliche Strukturen existieren können. In der Praxis der Gasadsorption ist die Obergrenze durch Dimensionen adsorbierender Probenmoleküle gegeben. Je näher die fraktale Dimension an 3 herankommt, umso feiner strukturiert und folglich umso "mikrorauher" ist die Oberfläche. Im Falle von Kohlenstoffoberflächen führt eine solche Mikrorauhigkeit dazu, daß vermehrt bindungsfähige oder zumindest attraktiv wirkende Unregelmäßigkeiten der elektronischen Zustanddichtefunktionen an der (inneren) Oberfläche auftreten mit der Folge einer verbesserten

Bindung von zu adsorbierenden Molekülspezies. Die Verbesserung der Bindung umfaßt einerseits eine Erhöhung der Packungsdichte innerhalb einer adsorbierten Monolage und andererseits eine erhöhte Bindungsfestigkeit.

Mit der Erfindung wurde u.a. erkannt, daß die Einstellung einer möglichst hohen fraktalen Dimension in Verbindung mit einer hohen Mikroporosität zu verbesserten Adsorptionsleistungen führt. Dies ist auch nicht widersprüchlich, weil geringe Meso- und Makroporosität die fraktale Dimension zwar theoretisch reduziert, jedoch der Beitrag der Meso- und Makroporosität insgesamt zur fraktalen Dimension recht gering ist.

Die Einstellung einerseits der Porenstruktur und andererseits der fraktalen Dimension ist dem Durchschnittsfachmann unschwer möglich, beispielsweise durch Herstellungsparametervariation gemäß der Literaturstelle WO 99/28234. Hierzu wird zumindest ein Parameter variiert und der Einfluß auf die genannten Größen bestimmt, wie in den Beispielen erläutert. Nach Maßgabe des ermittelten Einflusses werden die Parameter definiert so gesteuert bzw. verändert (im Falle des Verfahrens nach WO 99/28234 ist Extrapolation notwendig), daß die erfindungsgemäßen Eigenschaften erhalten werden. Selbstverständlich kann entsprechend im Rahmen anderer Herstellungsverfahren verfahren werden, wobei i.w. solche Verfahren in Frage kommen, die überhaupt grundsätzlich zur Herstellung von Aktivkohle-Hochleistungsadsorbentien geeignet sind.

Vorzugsweise weist eine erfindungsgemäße Kugelaktivkohle eine Porengrößenverteilung wie folgt auf: a) 1,2 - 1,7 nm: 30 - 40 %, insbesondere 32 - 36 %, b) 1,7 - 2,1 nm: 30 - 40 %, insbesondere 32 - 36 % c) 2,1 - 2,5 nm: 15 - 20 %, insbesondere 15 - 20 % d) 2,5 - 2,9 nm: 5 - 10 %, insbesondere 5 - 10 % e) 2,9 - 3,3 nm: 1 - 5 %, insbesondere 3 - 5 %. Die Summe aus a) bis e) kann zumindest 90 %, vorzugsweise zumindest 93% bis 95 %, ergeben. Die fraktale Dimension beträgt vorzugsweise zumindest 2,70, vorzugsweise zumindest 2,80, höchstvorzugsweise zumindest 2,90 bis 2,92.

Der Partikeldurchmesser ist grundsätzlich beliebig, vorzugsweise im Bereich von 0,1 bis 5 mm. Für Anwendungen in Gasfiltern, insbesondere Giftgasfiltern in Gasmassen, Gasschutzanzügen, oder dergleichen ist es bevorzugt, wenn der Partikeldurchmesser 0,5 bis 2 mm beträgt. Gasschutzanzüge sind aus textilen Materialien gefertigt, in welche ein Adsorptionsmittel eingebaut ist. Dies kann auf verschiedenste Weise erfolgen, beispielsweise durch Einweben oder durch Herstellung eines Multilayer-Textils, wobei eine Schicht ein Adsorptionsmittel enthält bzw. ummantelt. Gasschutzanzüge dienen insbesondere dem Schutz vor Kontaktgiften und/oder vor Mikroorganismen. In einer besonderen Ausführungsform der Erfindung, beispielsweise für Giftgasfilter, aber auch für andere Anwendungen, sind die Kugelaktivkohle-Partikel mit einem gasdurchlässigen, beispielsweise porösen, Mantel aus abriebfestem Werkstoff versehen. Hierdurch wird störender Kohlenstoffabrieb bei der Handhabung und in der Abwendung verhindert, ohne daß die Adsorptionsleistung nennenswert reduziert wird. Ein solcher Mantel läßt sich beispielsweise dadurch schaffen, daß die Kugelaktivkohle vor oder nach der Aktivierung mit beispielsweise einem fluiden natürlichen oder synthetischen organischen Bindemittel besprüht wird, welches sich nach anschließender thermischer Behandlung zu einem abriebfesten, aber porösen Kohlenstoffbinder umsetzt.

Die BET Oberfläche, gemessen gemäß Beispiel 2, liegt vorzugsweise im Bereich von 800 bis 1500 $m^2/g$, insbesondere 1000 bis 1300 $m^2/g$.

Eine erfindungsgemäße Kugelaktivkohle ist grundsätzlich dadurch erhältlich, daß als Edukt Polymerkugeln, insbesondere Ionenaustauscherkugeln, deren Polymergerüst abspaltbare funktionelle Gruppen, insbesondere Sulfonylgruppen und/oder Carboxylgruppen, enthalten, verwendet werden, daß die funktionellen Gruppen von dem Polymergerüst abgespalten werden und das Abspaltungsprodukt aus den Polymerkugeln ausgetrieben wird, daß die so erhaltenen porösen Polymerkugeln pyrolysiert werden, und daß optional die pyrolysierten Polymerkugeln einer Aktivierungsverfahrenstufe unterworfen werden. Die Abspaltung der funktionellen Gruppen erfolgt vorzugsweise bis zu einem Restgehalt (bezogen auf den Gewichtsanteil der funktionellen Gruppen, wie eingesetzt) von 5% bis 15%. Die Temperatur bei dieser ersten Wärmebehandlung liegt zweckmäßigerweise im Bereich von 200 °C bis 350 °C für 10 min. bis 60 min.. Die Atmosphäre ist hierbei grundsätzlich beliebig. Die anschließende Pyrolyseverfahrensstufe beginnt bei einer Temperatur, welche im wesentlichen der Endtemperatur der ersten Wärembehandlung entspricht und endet vorzugsweise bei 600 °C bis 800 °C. Die Aufheizrate liegt zweckmäßigerweise im Bereich von 5 K/min. bis 0,5 K/min., woraus sich die Dauer der Pyrolyseverfahrensstufe unmittelbar berechnen läßt. Die Aktivierungsverfahrenstufe ist unkritisch und erfolgt in üblicher Weise.

Eine erfindungsgemäße Kugelaktivkohle ist beispielsweise in Mitteln zur Filterung von Gasen, insbesondere Luftfiltern und Gasmasken bzw. Gasschutzanzügen, einsetzbar. Weitere Einsatzgebiete sind: Gastrennung, Gasspeicherung, Latentwärmetauscher, Filtereinrichtungen in Klimaanlagen, insbesondere auch im Ansaugbereich zur Adsorption unberechtigt im Ansaugbereich freigesetzter toxischer Gase, Träger für pharmazeutische Wirkstoffe.

Im Folgenden wird die Erfindung anhand von lediglich Ausführungsformen darstellenden Beispielen näher erläutert.

Beispiel 1: Herstellung einer erfindungsgemäßen Kugelaktivkohle.

Eingesetzt wird ein starksaurer, gelförmiger Kationenaustauscher aus sulfoniertem Styrol-Divinylbenzol Copolymerisat in der H-Form, wobei die Matrix mit ca. 8% Divinylbenzol-Anteil vernetzt ist, in Kugelform und einer Partikelgröße (Durchmesser) von 1 mm. Dieses handelsübliche Produkt (C100x10H, Purolite) wird zunächst dreimal mit entionisiertem Wasser gewaschen (30 min., 40 °C). Nach dem Waschen erfolgt eine Zentrifugation unter Vakuum (8000 g, 10 min., 10 mBar). Hieran schließt sich eine erste Wärmebehandlung in einer beheizten Schnecke zur Zersetzung und Austreibung der Sulfonylgruppen an, und zwar bis zu einem Restschwefelgehalt von 10 Gew.-%, bezogen auf den eingesetzten Gesamtschwefel. Diese erste Wärmebehandlung erfolgt unter Argon-Schutzgas bei 285 °C für 20 min.. Hieran anschließend erfolgt eine Pyrolyseverfahrensstufe in einem separaten Drehrohrofen mit indirekter Heizung und unter Argon-Schutzgas. Die Pyrolyseverfahrensstufe wird mit einem Aufheizgradienten von ca. 1 K/min., beginnend bei 285 °C und endend bei 680 °C durchgeführt. Hieraus ergibt sich eine Verweilzeit von ca. 400 min.. Nach der Pyrolyseverfahrensstufe wird eine Aktivierungsverfahrenstufe durchgeführt, wobei die pyrolysierten Kugeln in einer Aktivierungsgasatmosphäre (Ar 65 Vol.-%, $CO_2$ 7 Vol.-%, $H_2O$ 28 Vol.-%) für 240 min. auf 910 °C gehalten werden.

Die erhaltenen Kugelaktivkohlepartikel weisen einen Durchmesser von ca. 0,55 mm auf. Man erhält eine Kugelaktivkohle mit hohem Mikroporenanteil und vergleichsweise sehr geringem Meso- und Makroporenanteil sowie mit einer sehr hohen fraktalen Dimension. Die Porenverteilung sowie die fraktale Dimension werden gemäß den folgenden Beispielen bestimmt.

Beispiel 2: Bestimmung der BET Oberfläche.

Kugelaktivkohle aus Beispiel 1 wurde mit der Methode zur Ermittlung der BET-Oberfläche nach Brunauer, Emmett, Teller untersucht. Die Adsorption beruht im wesentlichen auf der Wechselwirkung elektrisch geladener Partikeln oder Dipole des Adsorbens (der adsorbierende Stoff) und des Adsorptivs (der Stoff, der adsorbiert wird). Verfolgt man bei konstanter Temperatur und konstantem Druck die von einem festen Adsorbens im Gleichgewichtszustand adsorbierte Menge an Adsorptiv, so erhält man die Adsorptionsisotherme. Die adsorbierte Menge, das Adsorpt, wird auf die Masse des Adsorbens bezogen. Der analysierte Verlauf entspricht dem Isothermentypen II (entsprechend der Klassifikation von Brunauer, L.S. Deming, W.S. Deming und Teller) mit der adsorbierten Menge auf der Ordinate und dem Gleichgewichtsdruck auf der Abszisse.. Für die Auswertung derartiger Isothermen, welche besonders auch bei höheren Gasdrücken und tieferen Temperaturen auftreten, stellt die von Brauner, Emmett und Teller eingeführte Verallgemeinerung des Langmurischen Mechanismus den in diesem Messverfahren beschrittene Weg dar. Hierbei wird die Adsorption elektrisch neutraler Partikeln vorausgesetzt und weiterhin angenommen, dass sich bei Sättigung nur eine monomolekulare Schicht bilden kann. Alle über das Adsorbensvolumen besetzbaren Plätze, lokalisiert sowie energetisch gleichwertig werden hierbei als Adsorptionszentren betrachtet. Die Desorptionshäufigkeit ist unbeeinflusst von der Belegung der benachbarten Plätze..Der BET Mechanismus hält die Vorstellung bestimmter Adsorptionszentren bei, bezieht aber die Bildung von Polyschichten mit ein. Die mathematischen Grundlagen der Auswertung sind wie folgt:

$$p/[\Gamma(p_0-p)] = 1/(\Gamma_\infty{*}C) + (C-1){*}p/(\Gamma_\infty{*}C{*}p_0)$$

Hierbei sind $p_0$ der Sättigungsdruck des Adsorptivs bei der Temeratur der Isotherme, $\Gamma_\infty$ die einer vollständigen Monoschicht entsprechende Adsorptionsdichte und C ist $\exp[(Q_A-Q_K)/(R{*}T)]$, wobei $Q_A$ die Adsorptionsenthalpie der Moleküle der ersten Schicht und $Q_k$ die Kondensationsenthalpie sind. Wird $p/[\Gamma(p_0-p)]$ gegen $p_0/p$ aufgetragen, so wird eine Gerade erhalten, aus deren Steigung und Ordinatenabschnitt $\Gamma_\infty$ und C bestimmt werden können. Ist dann der Bedarf an innerer Oberfläche für ein adsorbiertes Molekül bekannt, so kann mit Hilfe von $\Gamma_\infty$ die innere Oberfläche berechnet werden.

Entsprechende Untersuchung einer Aktivkohle aus Beispiel 1 ergab einen Wert von 1050 $m^2$/g.

Beispiel 3: Ermittlung der Porengrössen- Verteilung

Zur Ermittlung der Poren-Grössen-Verteilung benötigt man aus thermodynamischen Gründen die Desorptionsisotherme. Für Stickstoff als Adsorbat an seinem normalen Siedepunkt von 77,4 K wird die Kelvin-Gleichung wie folgt genutzt,

$$r_k = 4,15/\log p_0/p$$

unter Einbeziehung der physikalischen Grössen aus der Ermittlung der größten Porenradii r aus folgender Gleichung:

$$r = -(2*8,85*34,6)/(8,314*10^7*77,4*2,303*\log 0,99)$$
$$= 950*10^{-3} \text{ cm}$$

wobei 8,85 erg cm$^{-2}$ die Oberflächenspannung von $N_2$ bei 77,4 K, 34,6 cm$^3$ das molare Volumen von $N_2$ bei 77,4 K, 950*10$^{-3}$ cm die Porengrenzgröße und 0,99 das Verhältnis p/p$_0$ sind.

Der Ausdruck $r_k$ gibt den Radius der Poren an, in welchen bei erforderlichem relativ Druck die Kondensation stattfindet. Dieser Radius (Kelvin-Radius o. krit. Radius) ist nicht der tatsächliche Porenradius. Nach einigen angefahrenen Adsorptionspunkten ist die Porenwandung schon vor der nächsten Kondensation besetzt und $r_k$ gibt den Radius nach Verdampfen des Stickstoffs des "entkernten Zentrums" an. Wenn die Dicke des adsorbierten Filmes bei Kondensation oder Verdampfung t ist, dann ist der tatsächliche Porenradius $r_p$ gegeben durch:

$$r_p = r_k + t.$$

Um $r_p$ zu errechnen, ist noch eine Ermittlung der Filmstärke t nötig. Unter der Annahme, dass die adsorbierte Filmstärke für jeden Wert des relativ Druckes in einer.Pore die gleiche ist wie auf einer ebenen Fläche, gilt nachfolgende Beziehung.

$$t = (W_a/W_m)\tau$$

wobei $W_a$ und $W_m$ jeweils die Adsorptionsquantität an definiertem relativ Druck und der Menge der diesem BET-Wert zugehörigen Monoschicht entsprechen. Im wesentlichen sagt diese Gleichung aus, dass die Stärke des adsorbierten Films gleich der Anzahl der Schichten mal der Stärke einer einzelnen Schicht ist, ungeachtet dessen, ob sich der Film in einer Pore oder auf einer ebenen Fläche befindet. Der Wert kan berechnet werden , indem man das Volumen V und die Fläche S einer Oberfläche betrachtet, welche von einem Mol flüssigen Stickstoffs in einer monomolekularen Schicht benetzt ist.

$$S = 16,2*6,02*10^{23} = 97,5 \ 10^{23} \ A^2 (A=\text{Angström})$$

$$V = 34,6*10^{23} \ A^3$$

Daraus folgt:

$$\tau = V/S = 3,54 \ A$$

Der Wert 3,54 A entspricht nicht ganz dem Durchmesser eines Stickstoffmoleküls. Dies folgt, wenn man die Flüssigkeitsstruktur betrachtet, aus der Tatsache, dass Flüssigkeiten dazu neigen in hexagonal geschlossenen Verbänden angeordnet zu sein, wobei jedes Molekül in Depression zwischen drei Molekülen in der darunter und darüber befindlichen Schicht positioniert ist. Mit dieser Kenntnis kann die Berechnung von t wie folgt durchgeführt werden.

$$t = (W_a/W_m)*3,54 \text{ A}$$

Auf nichtporösen Oberflächen wurde nachgewiesen, dass wenn man $W_a/W_m$ gegen $p/p_o$ aufträgt, alle Daten annähernd der allgemeinen Typ II Isotherme an einem relativ Druck von 0,3 entsprechen. Dies deutete wiederum daraufhin, wenn zum Beispiel $W_a/W_m = 3$ ist, dass die adsorbierte Schichtstärke t = 10,62 A beträgt, ungeachtet welches Adsorbent eingesetzt wird. Die allgemeine Kurve wird exakt durch die Halsey Gleichung beschrieben.

$$t = 3,54*(5/[2,303*\log p_0/p])^{1/3}$$

Um die Poren-Grössen-Verteilung zu berechnen, nutzt man die Daten der Tabelle 1. Die hier angegebenen adsorbierten Volumina entstammen einer hypothetischen Isotherme. Das genutzte Verfahren ist die numerische Integrationsmethode nach Pierce, von Orr und Dalla Valle modifiziert in Hinblick auf die Berechnung der Stärke des adsorbierten Films. Diese Methode sowie auch die numerische Integartionsmethode nach Barett, Joyner und Halenda nutzte Wheeler für seine Theorie, dass die Kondensation in den Poren genau dann geschieht, wenn der dem entsprechenden Kelvin-Radius $r_k$ zugehörige kritische relativ Druck erreicht ist. Dieses Modell nimmt ebenfalls an, dass eine adsorbierte multimolekulare Schicht der Stärke t, sowohl auf einer Poreninnenwand als auch auf einer nichtporösen Oberfläche in der gleichen Stärke existieren würde. Um nach dieser Methode vorzugehen, kann Tabelle 1 genutzt werden. Diese Tabelle 1 beinhaltet gebräuchliche Daten der Adsorptions- und Desorptionsisotherme. Gewöhnlich wird zur Ermittlung die Desorptionsisotherme herangezogen, außer in jenen Fällen, bei denen die Adsorption der thermodynamisch stabilere Zustand ist. In beiden Fällen werden die Daten absteigend von hohen zu niedrigen Drücken berechnet. Spalten 1 und 2 der Tabelle 1 enthalten Daten, welche direkt der Isotherme entstammen, wobei das adsorbierte Volumen generell auf ein Gramm Adsorbent bezogen wird. Alle anderen Daten können errechnet werden. Daraus ergibt nachfolgende Gleichung die Möglichkeit der exakten Ermittlung der Porenvolumina bei veränderlichem relativ Druck.

$$V_{pn} = [r_{pn}/(r_{kn} + \Delta t_n/2)]^2 * (\Delta V_n - \Delta t_n * \sum_{j=1}^{n-1} Ac_j)$$

$$A_p = 2V_p/r_p$$

$$c = (r_p - t)/r_p$$

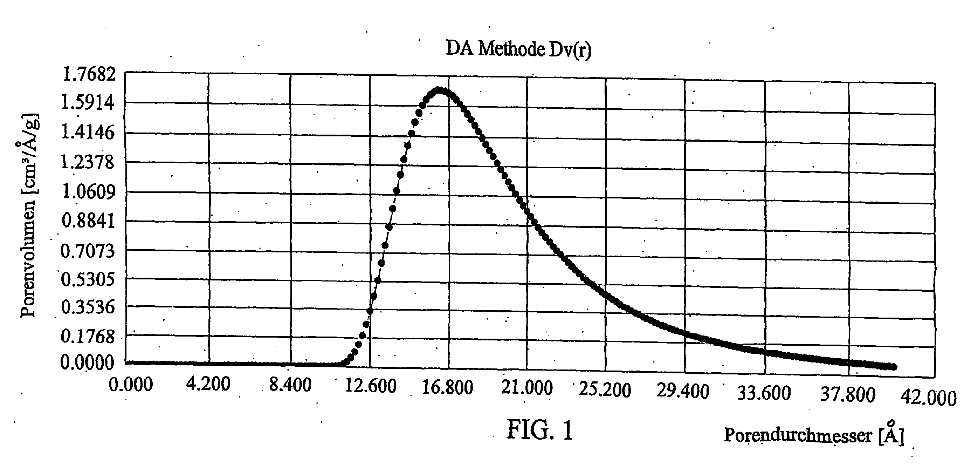

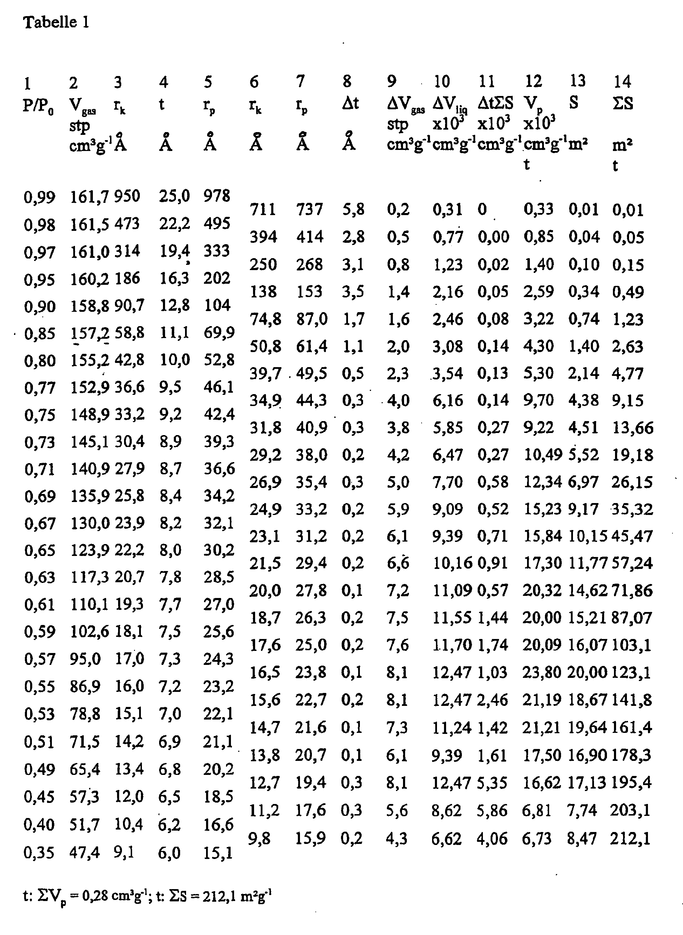

Die mit einer Aktivkohle gemäß Beispiel 1 erhaltene Porengrößenverteilung ist in der Figur 1 dargestellt. Nach Integration ergeben sich die folgenden Werte: 1,2 - 1,7: ca. 33%, 1,7 - 2,1: ca. 34%, 2,1 - 2,5: ca. 16%, 2,5 - 2,9: ca. 6%, 2,9 - 3,3: ca. 4%. Die Poren < 4 nm bilden ca. 94% des gesamten (offenen) Porenvolumens.

Beispiel 4: Bestimmung der fraktalen Dimension

Die fraktale Dimension dient zur Charakterisierung von Oberflächen und basiert auf der fraktalen Geometrie zur Beschreibung der Topographie wirklicher Oberflächen. Dabei ist die fraktale Dimension D ein idealer Parameter zur Beschreibung der Rauheit realer Oberflächen. Zurückzuführen ist diese Grösse auf die Mathematiker Hausdorff und Besicovitch, welche nachgewiesen haben, dass D für nicht Standardfiguren (Oberflächen) nicht ganzzahlig sein muß und für jede mathematische Menge eine reelle Zahl D existiert. Hausdorff hat die einfachste Kategorie dieser reellen Zahlen (positiv und endlich) nachgewiesen, dass sie sowohl die Cantor-Menge als auch Koch-Kurve enthält. Bezüglich der Ermittlung der fraktalen Dimension D für innere Oberflächen von Adsorbentien haben sich zwei Methoden als praktikabel erwiesen, da sie für ihre Berechnung mit einer Gassorptions-Isotherme auskommen. Dies ist zum einem die Methode nach Neimark-Kiselev (NK Methode) und zum anderen nachfolgend näher beschrieben, die Frenkel-Halsey-Hill (FHH) Methode.

Die FHH-Methode wird wie folgt angewandt. Aufgrund der Erkenntnis, dass in Regionen, in denen die Adsorption in Multischichten geschieht, der Einfluss von Kräften der inneren Oberfläche abnimmt, leiteten unabhängig voneinander mehrere Autoren folgende Isothermengleichung ab.

$$\log p_0/p = B/V^s$$

wobei B ein Parameter ist, welcher Wechselwirküngen zwischen Adsorbent-Adsorbat und zwischen Adsorbat-Adsorbat widerspiegelt. V ist die Menge an Adsorbat und s gibt eine konstante Eigenschaft des genutzten Adsorbents an. Nach heutiger Erkenntnis korreliert s mit der fraktalen Dimension D des Adsorbens durch die Beziehung D = 3(1+s), wobei unter Berücksichtigung von Oberflächenspannungseffekten in der Praxis mit

$$D = 3 + s$$

gearbeitet wird.

In beiden Fällen für fraktale Oberflächen ergibt V gegen $p_0/p$ aufgetragen innerhalb der Grenzen der Multischichtadsorption der Isotherme eine Gerade mit negativer Steigung, welche dem Wert von s entspricht.

Die Analyse wird wie folgt durchgeführt. Zur Aufnahme der Adsorptions- und Desorptions-Isothermen der unter Prüfung befindlichen Adsorbenzien wird ein High speed gas sorption analyzer der Fa. Quantachrome eingesetzt. Die Probenmenge beschränkt sich bei den zu erwartenden Adsorptionsleistungen auf 100 mg Adsorbent (nicht aufgemahlen). Die Aufnahme der Isothermen erfolgt bei einer Temperatur von 77,4 K mit Stickstoff (reinst) als Adsorptiv. Zur Auswertung werden die vorstehend genannten Methoden, insbesondere die FHH Methode, genutzt.

Kugelaktivkohle aus Beispiel 1 wurde demgemäß auf die fraktale Dimension untersucht. Als Wert wurde D = 2,926 erhalten.

**Patentansprüche**

1. Kugelaktivkohle mit einer Porengrößenverteilung, angegeben als Vol-% des Gesamtporenvolumens im Porendurchmesserbereich und gemessen gemäß Beispiel 3, wie folgt:

   a) 1,2 - 1,7 nm: 20 - 50 %
   b) 1, 7 - 2,1 nm: 20 - 50 %
   c) 2,1 - 2,5 nm: 10 - 25 %
   d) 2,5 - 2,9 nm: 3 - 15 %
   e) 2,9 - 3,3 nm: 1 - 10 %

   wobei die Summe aus a) bis e) zumindest 88 % ergibt,
   wobei die Differenz der Summe aus a) bis e) zu 100% einen Anteil Poren mit einem Durchmesser < 1,2 nm und/oder > 3,3 nm definiert, und
   wobei die fraktale Dimension der offenen Porosität, gemessen gemäß Beispiel 4, zumindest 2,30 beträgt.

2. Kugelaktivkohle nach Anspruch 1 mit einer Porengrößenverteilung wie folgt:

   a) 1,2 - 1,7 nm: 30 - 40 %
   b) 1,7 - 2,1 nm: 30 - 40 %
   c) 2,1 - 2,5 nm: 15 - 20 %
   d) 2,5 - 2,9 nm: 5 - 10 %
   e) 2,9 - 3,3 nm: 1 - 5 %

3. Kugelaktivkohle nach Anspruch 1 mit einer Porengrößenverteilung wie folgt:

a) 1, 2 - 1,7 nm: 32 - 36 %
b) 1, 7 - 2,1 nm: 32 - 36 %
c) 2,1 - 2,5 nm: 15 - 20 %
d) 2,5 - 2, 9 nm: 5 - 10 %
e) 2,9 - 3,3 nm: 3 - 5 %

4. Kugelaktivkohle nach einem der Ansprüche 1 bis 3, wobei die Summe aus a) bis e) zumindest 90 %, vorzugsweise zumindest 93 %, ergibt.

5. Kugelaktivkohle, nach einem der Ansprüche 1 bis 4, wobei die fraktale Dimension zumindest 2,70, vorzugsweise zumindest 2,80, höchstvorzugsweise zumindest 2,90 bis 2,92, beträgt.

6. Kugelaktivkohle nach einem der Ansprüche 1 bis 5, wobei der Partikeldurchmesser 0,1 bis 3 mm, vorzugsweise 0,5 bis 1 mm, beträgt.

7. Kugelaktivkohle nach einem der Ansprüche 1 bis 6, wobei die BET Oberfläche, gemessen gemäß Beispiel 2, im Bereich von 800 bis 1500 $m^2$/g, insbesondere 1000 bis 1300 $m^2$/g, beträgt.

8. Kugelaktivkohle nach einem der Ansprüche 1 bis 7, **dadurch** erhältlich, daß als Edukt Polymerkugeln, insbesondere Ionenaustauscherkugeln, deren Polymergerüst abspaltbare funktionelle Gruppen, insbesondere Sulfonylgruppen und/oder Carboxylgruppen, enthalten, verwendet werden, daß die funktionellen Gruppen von dem Polymergerüst abgespalten werden und das Abspaltungsprodukt aus den Polymerkugeln ausgetrieben wird, daß die so erhaltenen porösen Polymerkugeln pyrolysiert werden, und daß optional die pyrolysierten Polymerkugeln einer Aktivierungsverfahrenstufe unterworfen werden.

9. Verwendung einer Kugelaktivkohle nach einem der Ansprüche 1 bis 8 in Mitteln zur Filterung von Gasen, insbesondere Luftfiltern, Gasmasken und/oder Gasschutzanzügen.

**Claims**

1. Spherical activated carbon having a pore size distribution, reported as percent by volume of the total pore volume in the pore diameter range and measured according to Example 3, as follows:

a) 1.2 - 1.7 nm: 20 - 50%
b) 1.7 - 2.1 nm: 20 - 50 %
c) 2.1 - 2.5 nm: 10 - 25 %
d) 2.5 - 2.9 nm: 3 - 15 %
e) 2.9 - 3.3 nm: 1 - 10%

wherein the sum total of a) to e) is at least 88 %,
wherein the difference of the sum total of a) to e) to 100 % defines a fraction of pores having a diameter < 1.2 nm and/or > 3.3 nm, and
wherein the fractal dimension of the open porosity, measured according to Example 4, is at least 2.30.

2. Spherical activated carbon according to Claim 1 having a pore size distribution as follows:

a) 1.2 - 1.7 nm: 30 - 40%
b) 1.7 - 2.1 nm: 30 - 40%
c) 2.1 - 2.5 nm: 15 - 20 %
d) 2.5 - 2.9 nm: 5 - 10%
e) 2.9 - 3.3 nm: 1 - 5 %

3. Spherical activated carbon according to Claim 1 having a pore size distribution as follows:

a) 1.2 - 1.7 nm: 32 - 36 %
b) 1.7 - 2.1 nm: 32-36%
c) 2.1 - 2.5 nm: 15 - 20 %

d) 2.5 - 2.9 nm: 5 - 10%
e) 2.9 - 3.3 nm: 3 - 5 %

4. Spherical activated carbon according to any one of Claims 1 to 3, wherein the sum total of a) to e) is at least 90 %, preferably at least 93 %.

5. Spherical activated carbon according to any one of Claims 1 to 4, wherein the fractal dimension is at least 2.70, preferably at least 2.80, most preferably at least 2.90 to 2.92.

6. Spherical activated carbon according to any one of Claims 1 to 5, wherein the particle diameter is 0.1 to 3 mm, preferably 0.5 to 1 mm.

7. Spherical activated carbon according to any one of Claims 1 to 6, wherein the BET surface area, measured as per Example 2, is in the range from 800 to 1,500 $m^2/g$, in particular 1,000 to 1,300 $m^2/g$.

8. Spherical activated carbon according to any one of Claims 1 to 7, obtainable by using polymer beads, in particular ion-exchange beads, the polymeric scaffold of which contains detachable functional groups, in particular sulphonyl groups and/or carboxyl groups, as a starting material, detaching the functional groups from the polymeric scaffold and expelling the detachment product from the polymer beads, pyrolysing the porous polymer beads thus obtained and, optionally, subjecting the pyrolysed polymer beads to an activation process stage.

9. Use of a spherical activated carbon according to any one of Claims 1 to 8 in means for faltering gases, in particular air filters, gas masks and/or gas protection suits.

**Revendications**

1. Charbon actif sphérique présentant une distribution de taille de pores, indiquée en pourcent en volume du volume total de pores dans la plage de diamètres de pores et mesurée conformément à l'exemple 3, comme suit :

   a) 1,2 - 1,7 nm: 20 - 50 %
   b) 1,7 - 2,1 nm: 20 - 50 %
   c) 2,1 - 2,5 nm: 10 - 25 %
   d) 2,5 - 2,9 nm: 3 - 15 %
   e) 2,9 - 3,3 nm: 1 - 10 %

   où la somme de a) à e) est d'au moins 88 %,
   où la différence entre la somme de a) à e) et 100 % définit une fraction de pores présentant un diamètre < 1,2 nm et/ou > 3,3 nm, et
   où la dimension fractale de la porosité ouverte, mesurée conformément à l'exemple 4, est d'au moins 2,30.

2. Charbon actif sphérique selon la revendication 1, présentant une distribution de taille de pores comme suit :

   a) 1,2 - 1,7 nm: 30 - 40%
   b) 1,7 - 2,1 nm: 30 - 40 %
   c) 2,1 - 2,5 nm: 15 - 20 %
   d) 2,5 - 2,9 nm: 5 - 10 %
   e) 2,9 - 3,3 nm: 1 - 5 %

3. Charbon actif sphérique selon la revendication 1, présentant une distribution de taille de pores comme suit :

   a) 1,2 - 1,7 nm: 32 - 36 %
   b) 1,7 - 2,1 nm: 32 - 36 %
   c) 2,1 - 2,5 nm: 15 - 20 %
   d) 2,5 - 2,9 nm: 5 - 10 %
   e) 2,9 - 3,3 nm: 3 - 5 %

4. Charbon actif selon l'une quelconque des revendications 1 à 3, où la somme de a) à e) est d'au moins 90 %, de préférence d'au moins 93 %.

5. Charbon actif sphérique selon l'une quelconque des revendications 1 à 4, où la dimension fractale est d'au moins 2,70, de préférence d'au moins 2,80, le plus préférablement d'au moins 2,90 à 2,92.

6. Charbon actif sphérique selon l'une quelconque des revendications 1 à 5, où le diamètre de particules est de 0,1 à 3 mm, de préférence de 0,5 à 1 mm.

7. Charbon actif sphérique selon l'une quelconque des revendications 1 à 6, où la surface BET, mesurée conformément à l'exemple 2, est dans la plage de 800 à 1500 m$^2$/g, en particulier de 1000 à 1300 m$^2$/g.

8. Charbon actif sphérique selon l'une quelconque des revendications 1 à 7, pouvant être obtenu en utilisant, en tant que substance de départ, des billes polymères, en particulier des billes échangeuses d'ions, dont le squelette polymère renferme des groupes fonctionnels clivables, en particulier des groupes sulfonyle et/ou des groupes carboxyle, en clivant les groupes fonctionnels du squelette polymère et en expulsant le produit de clivage des billes polymères, en pyrolysant les billes polymères poreuses ainsi obtenues et en soumettant éventuellement les billes polymères polymérisées à une étape de procédé d'activation.

9. Utilisation d'un charbon actif sphérique selon l'une quelconque des revendications 1 à 8 dans des moyens de filtration de gaz, en particulier des filtres à air, des masques à gaz et/ou des combinaisons de protection contre les gaz.

FIG. 1

Tabelle 1

| 1 | 2 | 3 | 4 | 5 | 6 | 7 | 8 | 9 | 10 | 11 | 12 | 13 | 14 |
|---|---|---|---|---|---|---|---|---|----|----|----|----|----|
| $P/P_0$ | $V_{gas}$ stp cm³g⁻¹ | $r_k$ Å | $t$ Å | $r_p$ Å | $r_k$ Å | $r_p$ Å | $\Delta t$ Å | $\Delta V_{gas}$ stp cm³g⁻¹ | $\Delta V_{liq}$ x10³ cm³g⁻¹ | $\Delta t \Sigma S$ x10³ cm³g⁻¹ | $V_p$ x10³ cm³g⁻¹ t | $S$ m² t | $\Sigma S$ m² t |
| 0,99 | 161,7 | 950 | 25,0 | 978 | | | | | | | | | |
| 0,98 | 161,5 | 473 | 22,2 | 495 | 711 | 737 | 5,8 | 0,2 | 0,31 | 0 | 0,33 | 0,01 | 0,01 |
| 0,97 | 161,0 | 314 | 19,4 | 333 | 394 | 414 | 2,8 | 0,5 | 0,77 | 0,00 | 0,85 | 0,04 | 0,05 |
| 0,95 | 160,2 | 186 | 16,3 | 202 | 250 | 268 | 3,1 | 0,8 | 1,23 | 0,02 | 1,40 | 0,10 | 0,15 |
| 0,90 | 158,8 | 90,7 | 12,8 | 104 | 138 | 153 | 3,5 | 1,4 | 2,16 | 0,05 | 2,59 | 0,34 | 0,49 |
| 0,85 | 157,2 | 58,8 | 11,1 | 69,9 | 74,8 | 87,0 | 1,7 | 1,6 | 2,46 | 0,08 | 3,22 | 0,74 | 1,23 |
| 0,80 | 155,2 | 42,8 | 10,0 | 52,8 | 50,8 | 61,4 | 1,1 | 2,0 | 3,08 | 0,14 | 4,30 | 1,40 | 2,63 |
| 0,77 | 152,9 | 36,6 | 9,5 | 46,1 | 39,7 | 49,5 | 0,5 | 2,3 | 3,54 | 0,13 | 5,30 | 2,14 | 4,77 |
| 0,75 | 148,9 | 33,2 | 9,2 | 42,4 | 34,9 | 44,3 | 0,3 | 4,0 | 6,16 | 0,14 | 9,70 | 4,38 | 9,15 |
| 0,73 | 145,1 | 30,4 | 8,9 | 39,3 | 31,8 | 40,9 | 0,3 | 3,8 | 5,85 | 0,27 | 9,22 | 4,51 | 13,66 |
| 0,71 | 140,9 | 27,9 | 8,7 | 36,6 | 29,2 | 38,0 | 0,2 | 4,2 | 6,47 | 0,27 | 10,49 | 5,52 | 19,18 |
| 0,69 | 135,9 | 25,8 | 8,4 | 34,2 | 26,9 | 35,4 | 0,3 | 5,0 | 7,70 | 0,58 | 12,34 | 6,97 | 26,15 |
| 0,67 | 130,0 | 23,9 | 8,2 | 32,1 | 24,9 | 33,2 | 0,2 | 5,9 | 9,09 | 0,52 | 15,23 | 9,17 | 35,32 |
| 0,65 | 123,9 | 22,2 | 8,0 | 30,2 | 23,1 | 31,2 | 0,2 | 6,1 | 9,39 | 0,71 | 15,84 | 10,15 | 45,47 |
| 0,63 | 117,3 | 20,7 | 7,8 | 28,5 | 21,5 | 29,4 | 0,2 | 6,6 | 10,16 | 0,91 | 17,30 | 11,77 | 57,24 |
| 0,61 | 110,1 | 19,3 | 7,7 | 27,0 | 20,0 | 27,8 | 0,1 | 7,2 | 11,09 | 0,57 | 20,32 | 14,62 | 71,86 |
| 0,59 | 102,6 | 18,1 | 7,5 | 25,6 | 18,7 | 26,3 | 0,2 | 7,5 | 11,55 | 1,44 | 20,00 | 15,21 | 87,07 |
| 0,57 | 95,0 | 17,0 | 7,3 | 24,3 | 17,6 | 25,0 | 0,2 | 7,6 | 11,70 | 1,74 | 20,09 | 16,07 | 103,1 |
| 0,55 | 86,9 | 16,0 | 7,2 | 23,2 | 16,5 | 23,8 | 0,1 | 8,1 | 12,47 | 1,03 | 23,80 | 20,00 | 123,1 |
| 0,53 | 78,8 | 15,1 | 7,0 | 22,1 | 15,6 | 22,7 | 0,2 | 8,1 | 12,47 | 2,46 | 21,19 | 18,67 | 141,8 |
| 0,51 | 71,5 | 14,2 | 6,9 | 21,1 | 14,7 | 21,6 | 0,1 | 7,3 | 11,24 | 1,42 | 21,21 | 19,64 | 161,4 |
| 0,49 | 65,4 | 13,4 | 6,8 | 20,2 | 13,8 | 20,7 | 0,1 | 6,1 | 9,39 | 1,61 | 17,50 | 16,90 | 178,3 |
| 0,45 | 57,3 | 12,0 | 6,5 | 18,5 | 12,7 | 19,4 | 0,3 | 8,1 | 12,47 | 5,35 | 16,62 | 17,13 | 195,4 |
| 0,40 | 51,7 | 10,4 | 6,2 | 16,6 | 11,2 | 17,6 | 0,3 | 5,6 | 8,62 | 5,86 | 6,81 | 7,74 | 203,1 |
| 0,35 | 47,4 | 9,1 | 6,0 | 15,1 | 9,8 | 15,9 | 0,2 | 4,3 | 6,62 | 4,06 | 6,73 | 8,47 | 212,1 |

t: $\Sigma V_p = 0{,}28$ cm³g⁻¹; t: $\Sigma S = 212{,}1$ m²g⁻¹

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0326271 A
- WO 9621616 A
- WO 9928234 A